# EUROPEAN PATENT APPLICATION

(11) **EP 4 835 819 A1**
(43) Date of publication of application: **04.11.2026**
(21) Application number: 26171769.8
(22) Date of filing: 10.04.2026
(51) Int. Cl.: G06T 7/73

(54) **OPTICAL FLOW-BASED POSE ESTIMATION FOR AUTOMATED AERIAL REFUELING**

(30) Priority: 01.05.2025 US 202519195888
(71) Applicant: The Boeing Company, Arlington, VA 22202 (US)
(72) Inventor: LATIB, Tameez, Arlington, 22202 (US); NGUYEN, Leon Nhat, Arlington, 22202 (US); KHOSLA, Deepak, Arlington, 22202 (US); HUNG, Fan Hin, Arlington, 22202 (US); RATZLAFF, Neale James, Arlington, 22202 (US)
(74) Representative: Boult Wade Tennant LLP

(57) **Abstract**

Pose estimation for aerial refueling. The method comprises receiving input of a first video frame containing an object. The first frame comprises a first set of 2D keypoints that correspond to 3D keypoints on a model of the object. Input of a second video frame containing the object is received. The second frame is sequentially subsequent to the first frame in time. The first and second frames are fed into an optical flow algorithm, which estimates a second set of 2D keypoints for the second frame based on the set of 2D keypoints in the first frame. The second set of 2D keypoints and camera parameters are fed into a perspective-n-point algorithm, which estimates a six-degrees-of-freedom pose of the object in the second frame. The position of an aerial refueling boom is adjusted in real-time based on the estimated 6DOF pose of the object.

## Description

### BACKGROUND INFORMATION

### Technical Field:

The present disclosure relates generally to refueling aircraft, and more specifically to pose estimation for controlling aircraft refueling operations.

### Background:

With air-to-air refueling a six degree of freedom (6DoF) position and orientation is estimated for a receiver aircraft following behind a fuel tanker aircraft. The position and orientation are referred to as a pose. The fuel tanker aircraft is equipped with a refueling boom that has an end that can be maneuvered to be inserted into a receptacle in the receiver aircraft to begin a refueling operation.

For example, a camera on the fuel tanker aircraft can generate images of the boom and receiver aircraft. A machine learning model can perform real time 6DoF pose estimation as part of a process to control the refueling operation using the boom.

### SUMMARY

There is described herein a computer-implemented method of pose estimation for aerial refueling. The method comprises receiving input of a first video frame containing an object, wherein the first video frame comprises a first set of two-dimensional (2D) keypoints that correspond to pre-chosen three-dimensional (3D) keypoints on a 3D model of the object. Input of a second video frame containing the object is received, wherein the second video frame is sequentially subsequent to the first video frame in time. The first video frame and second video frame are fed into an optical flow (OF) algorithm, which estimates a second set of 2D keypoints for the second video frame based on the first set of 2D keypoints in the first video frame. The second set of 2D keypoints and a number of camera parameters are fed into a perspective-n-point (PnP) algorithm, which estimates a six-degrees-of-freedom (6DOF) pose of the object in the second video frame. The position of an aerial refueling boom is adjusted in real-time based on the estimated 6DOF pose of the object.

There is described herein a system for pose estimation for aerial refueling. The system comprises a storage device that stores program instructions and one or more processors operably connected to the storage device and configured to execute the program instructions to cause the system to: receive input of a first video frame containing an object, wherein the first video frame comprises a first set of two-dimensional (2D) keypoints that correspond to pre-chosen three-dimensional (3D) keypoints on a 3D model of the object; receive input of a second video frame containing the object, wherein the second video frame is sequentially subsequent to the first video frame in time; feed the first video frame and second video frame into an optical flow (OF) algorithm; estimate, by the OF algorithm, a second set of 2D keypoints for the second video frame based on the first set of 2D keypoints in the first video frame; feed the second set of 2D keypoints and a number of camera parameters into a perspective-n-point (PnP) algorithm; estimate, by the PnP algorithm, a six-degrees-of-freedom (6DOF) pose of the object in the second video frame; and adjust a position of an aerial refueling boom in real-time based on the estimated 6DOF pose of the object.

There is described herein a computer program product for pose estimation for aerial refueling. The computer program product comprises a computer-readable storage medium having program instructions embodied thereon to perform the operations of: receiving input of a first video frame containing an object, wherein the first video frame comprises a first set of two-dimensional (2D) keypoints that correspond to pre-chosen three-dimensional (3D) keypoints on a 3D model of the object; receiving input of a second video frame containing the object, wherein the second video frame is sequentially subsequent to the first video frame in time; feeding the first video frame and second video frame into an optical flow (OF) algorithm; estimating, by the OF algorithm, a second set of 2D keypoints for the second video frame based on the first set of 2D keypoints in the first video frame; feeding the second set of 2D keypoints and a number of camera parameters into a perspective-n-point (PnP) algorithm; estimating, by the PnP algorithm, a six-degrees-of-freedom (6DOF) pose of the object in the second video frame; and adjusting a position of an aerial refueling boom in real-time based on the estimated 6DOF pose of the object.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of illustrative examples of the present disclosure when read in conjunction with the accompanying drawings, wherein:
Figure 1 is an illustration of a pose estimation for a receiver aircraft;
Figure 2 depicts a flowchart illustrating a notional algorithm for 6DOF pose estimation;
Figure 3 depicts a block diagram illustrating Kalman filter tracking of 6DOF pose;
Figure 4 depicts a block diagram illustrating optical flow (OF) 6DOF pose estimation;
Figure 5 depicts a block diagram illustrating late stage fusion of optical flow and machine learning to detect 2D keypoints;
Figure 6 depicts a block diagram illustrating early stage fusion of optical flow and machine learning to detect 2D keypoints;
Figure 7 depicts object detection, keypoint detection, and pose estimation within a video frame;
Figure 8 depicts visualization of 2D keypoints on the window of a receiver aircraft with partial occlusion by a refueling boom;
Figure 9 depicts a block diagram comparing heatmap and heatmap-free keypoint detection;
Figure 10 depicts a block diagram illustrating heatmap-guided keypoint detection training;
Figure 11 depicts a flowchart illustrating a method of pose estimation for aerial refueling;
Figure 12 depicts a flowchart illustrating a method for late stage integration of optical flow and machine learning pose estimation for aerial refueling;
Figure 13 depicts a flowchart illustrating a method for early stage integration of optical flow and machine learning pose estimation for aerial refueling;
Figure 14 depicts a flowchart illustrating a method for detecting 2D keypoints in a video frame;
Figure 15 depicts a flowchart illustrating a method for training a neural network to detect 2D keypoints in a video image frame; and
Figure 16 is an illustration of a block diagram of a data processing system.

### DETAILED DESCRIPTION

The illustrative examples recognize and take into account that previous methods of pose estimation employ machine learning to perform fast, real-time 6DOF pose estimation of a receiver aircraft for use in live air-to-air refueling. These methods rely on a deep neural network to detect two-dimensional (2D) keypoints on the object in each video frame and then use a tracker to smooth the frame-by-frame 6DOF pose estimates. However, these previous methods can fail in 2D keypoint detection for a given frame in the video. Although there are heuristics in the previous method to combat such spurious errors from affecting the tracked 6DOF pose result, there can be wider-ranging systematic errors due to the inability of the neural network-based keypoint detector to perform in certain conditions due to insufficient training.

The illustrative examples also recognize and take into account that for the case of tracking the pose of a receiver aircraft for air-to-air refueling, there can be multiple flight dynamics to account for with the various kinds of receiver aircrafts and dynamics associated with disturbances such as turbulence and unique pilot tendencies. These dynamics cannot be generally tracked well with a Kalman filter without fine-tuning tracker parameters.

The illustrative examples provide an optical flow (OF)-based method for 6DOF pose estimation (position and rotation in 3D space) of a rigid object captured in video. Inputs to the system include the previous video frame, 2D keypoints (i.e. landmarks or feature points) detected on an object in the previous video frame, and the current video frame. The outputs comprise 2D keypoints for the current video frame. This process is repeated frame-by-frame for the incoming video in real-time. The 2D keypoint information can be integrated as an input to find the 6DOF pose of the object via optimization using the PnP (perspective N-point) algorithm given corresponding 3D points on the object and camera intrinsic and extrinsic parameters. The optical flow method of the illustrative examples is able to adapt to new situations that are not included in training datasets for deep learning models.

The OF-based pose estimation can be integrated with deep learning 6DOF pose estimation as an additional method for estimating 6DOF pose, thereby adding redundancy and robustness. The 2D keypoint output and/or the 6DOF pose estimate of the OF method can be fused with the 2D keypoint detections or 6DOF pose estimation of the deep learning method. Furthermore, the OF 2D keypoint output and 6DOF pose estimation can be used as a heuristic check for the corresponding signals in the pipeline of the deep learning method.

The illustrative examples also provide fast heatmap-free method of keypoint detection that is initially trained with heatmaps in order to increase accuracy without diminishing runtime speeds.

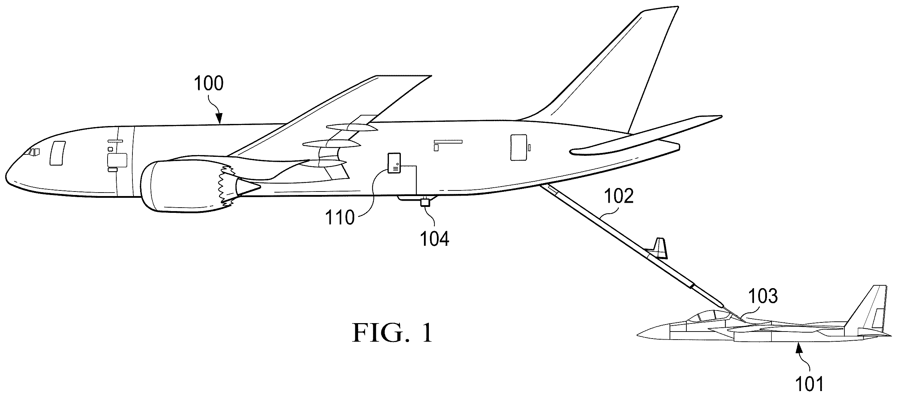

Figure 1 is an illustration of pose estimation for a receiver aircraft depicted in accordance with an illustrative example. In this and certain other illustrative examples, an air-to-air refueling operation between fueling tanker aircraft 100 and receiver aircraft 101 is shown. As depicted in this example, receiver aircraft 101 is following behind fueling tanker aircraft 100. Fueling tanker aircraft 100 is equipped with boom 102, which is coupled to receptacle 103 of receiver aircraft 101 for the refueling operation.

In this and certain other illustrative examples, boom 102 is guided to receptacle 103 and receiver aircraft 101 using images in camera images and video data generated by camera system 104. The video data has metadata such as timestamps and GPS information. This information forms video 105.

During normal operation of tanker aircraft 100, this video can be used by image processing algorithms and models in computer 110 to determine a pose estimate for receiver aircraft 101. In these and certain other illustrative examples, this pose estimate is a 6 degree of freedom (6DoF) pose estimate of the receiver aircraft 101. The 6DOF comprise x, y, z, yaw, pitch, and roll.

This pose estimate can be used by an automated controller in computer 110 to guide boom 102 into receptacle 103 of receiver aircraft 101.

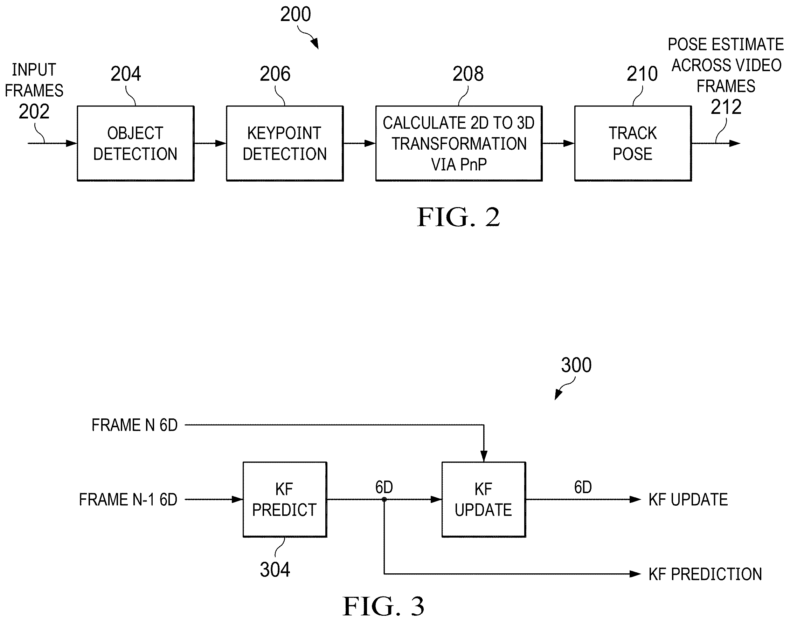

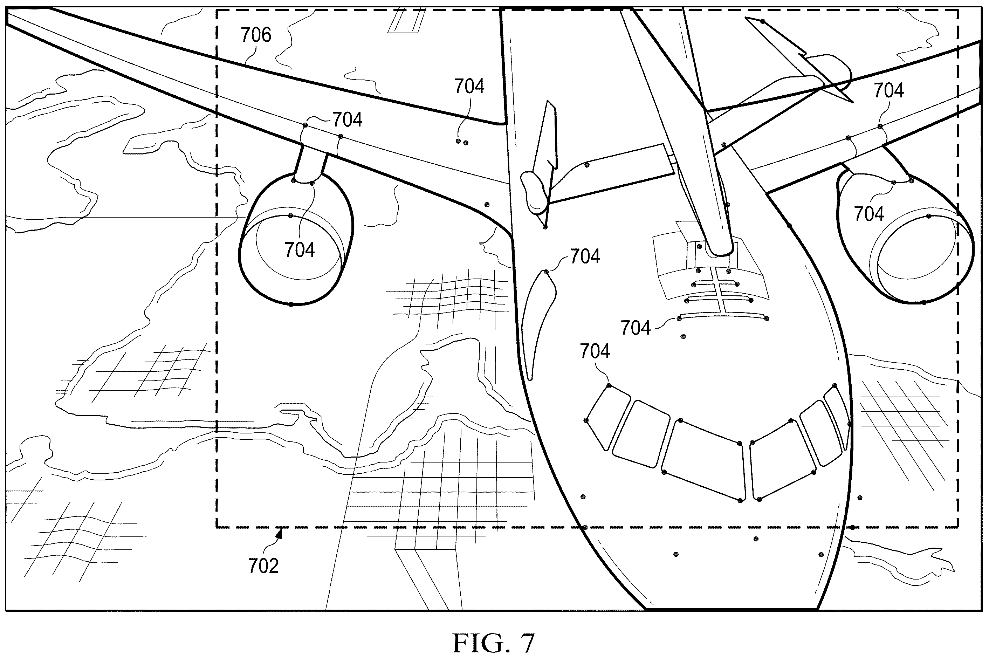

Figure 2 depicts a flowchart illustrating a notional algorithm for 6DOF pose estimation. For each of the input frames 202 process 200 performs object detection 204 that estimates a local region in the image where the object is located. Box 702 in Figure 7 is an example of object detection within a video frame image.

From the local region found by object detection 204, process 200 performs keypoint detection 206 that detects 2D keypoints on the object which correspond to pre-chosen keypoints on a 3D model of the object. Dots 704 in Figure 7 are examples of 2D keypoints detected in a video frame.

After the 2D keypoints are detected in the video frame, a 2D to 3D transformation 208 is calculated with the PnP algorithm. This transformation allows 6DOF pose estimation by using the detected 2D keypoints, pre-chose 3D keypoints on the 2D model, and camera intrinsic and extrinsic parameters to solve the PnP. The contour outline 706 in Figure 7 shows an example pose estimation in a video frame.

The estimated pose is then tracked 210 with a Kalman filter (KF) or similar tracker with heuristics on when to initiate and deactivate tracks to temporally track the 6DOF pose estimations 212 across the video frames See Figure 3).

Figure 3 depicts a block diagram illustrating Kalman filter tracking of 6DOF pose. Architecture 300 is a detailed example of pose tracking 210 in Figure 2. The 6DOF pose solution from the previous video frame (Frame N-1) is used to predict the 6DOF estimate of the current video frame (Frame N), which is the KF prediction. The KF prediction is also updated by the current Frame N 6DOF pose solution from the PnP algorithm. This KF update provides a 6DOF pose answer that is informed by the current frame's observation.

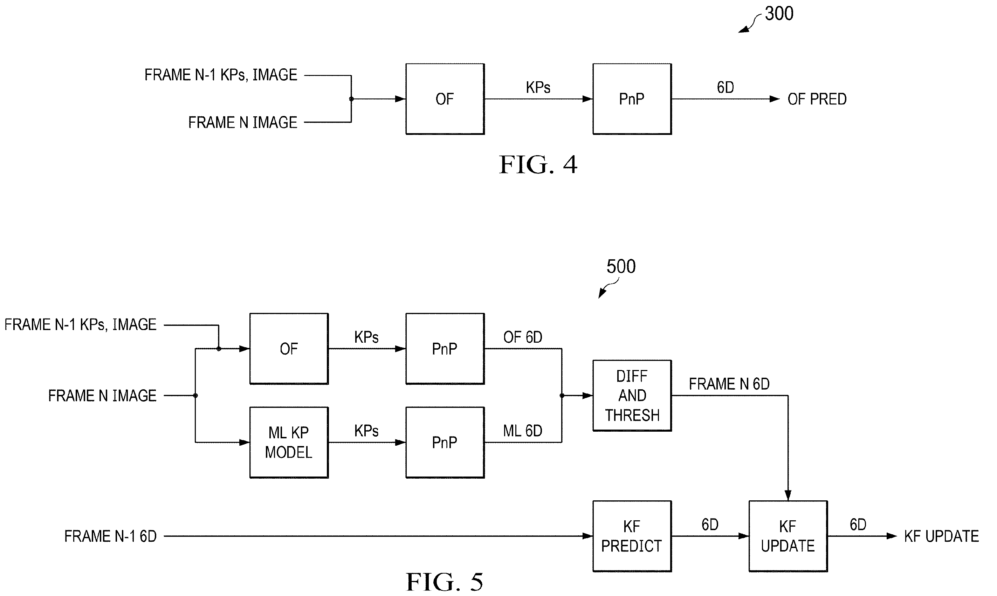

Figure 4 depicts a block diagram illustrating optical flow (OF) 6DOF pose estimation in accordance with an illustrative examples. OF architecture 400 takes several pieces of information as given. The first given is video of an object moving in a temporally consistent manner, e.g., video of a received aircraft such as receiver aircraft 101 in Figure 1. The next given are 3D points in model space from a 3D model of the object (receiver aircraft), which is used for solving for 6DOF pose. These 3D points in model space should correspond with the 2D keypoints detected in the video frames, e.g., 2D keypoints 704 in Figure 7. Another given are camera intrinsic parameters, e.g., focal length, aspect ratio, principle point, image resolution, distortion parameters, etc. The last given are camera extrinsic parameters, which comprise the camera's 6DOF pose in world space.

With the above given information, 2D keypoints are found on the object in the current video frame. These 2D keypoints correspond to pre-chose 3D keypoints on a 3D model of the object. This video frame and its 2D keypoints are then stored, and the video frame becomes Frame N-1 as OF architecture 400 advances to the next frame, which becomes the new Frame N.

New Frame N, Frame N-1, and the 2D keypoints for Frame N-1 are input into an OF algorithm. The OF algorithm outputs 2D keypoints for Frame N. These 2D keypoints for Frame N are then input into the PnP algorithm, which solves for 6DOF pose. The PnP algorithm may also be used with the RANSAC (Random Sample Consensus) algorithm.

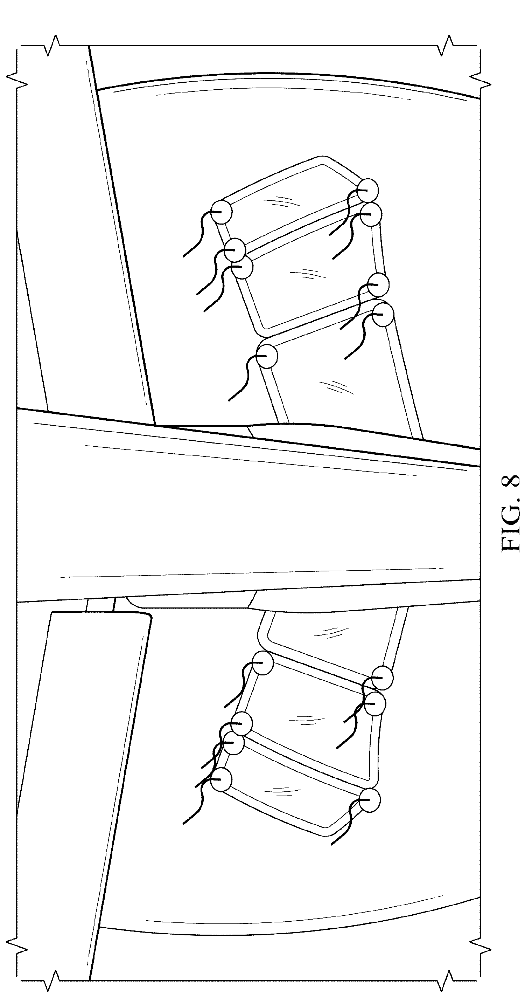

If the object in question is partially occluded, such as the receiver aircraft being occluded by the refueling boom (see Figure 8), OF architecture 400 can use the known location of the boom to disregard keypoints that are occluded by it and removed them from being used in the PnP step. In some examples including the example shown in Figure 8, certain keypoints on the middle window corners are not visualized because they are occluded by the boom and are therefore not used by PnP.

The OF method depicted in Figure 4 can be integrated into a broader deep learning-based 6DOF pose estimation pipeline such as the one shown in Figures 2 and 3. OF is used to assist frame-by-frame machine learning (ML) keypoint detection. There may be spurious video frames where the ML keypoint detector is not performant, thereby producing erroneous 2D keypoint estimates that negatively affect the 6DOF pose estimate. OF, which uses additional information from prior frames, acts as a backup method to estimate 6DOF to remedy this potential problem.

Figure 5 depicts a block diagram illustrating late stage fusion of optical flow and machine learning to detect 2D keypoints in accordance with an illustrative example. In this late stage fusion architecture 500, the OF method is used to check that the current (N) frame's 6DOF PnP solution from the deep learning method is within an expected bound. If it is not within this bound, then the OF-based 6DOF pose estimate is used instead.

The OF algorithm and ML keypoint model operate in parallel. The Frame N image is fed into both the OF and ML model. The Frame N-1 image and its detected 2D keypoints are also fed into OF. The respective predicted 2D keypoints for Frame N from each process are each fed into PnP separately to generate an OF 6DOF pose estimate and a ML 6DOF pose estimate. The OF and ML 6DOF estimates are then compared to each other. If the difference between the two 6DOF estimates exceeds a specified threshold, the OF-generated 6DOF pose estimate is selected. If the difference does not exceed the threshold, the ML-generated 6DOF pose estimate is selected.

Whichever 6DOF pose estimate is selected is used to update the Kalman filter 6DOF prediction as in architecture 300 in Figure 3.

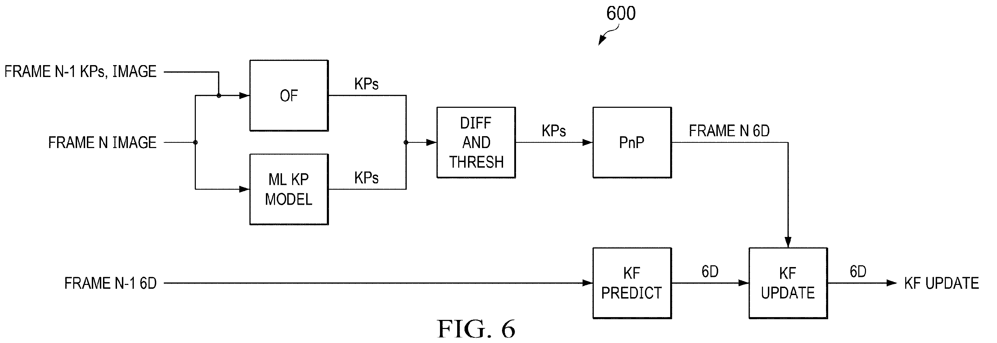

Figure 6 depicts a block diagram illustrating early stage fusion of optical flow and machine learning to detect 2D keypoints in accordance with an illustrative example. In this early stage fusion architecture 600, the keypoint estimates generated by OF and ML are compared before application of the PnP algorithm.

If the difference between the OF and ML estimated keypoints exceeds a specified threshold, the OF-estimated keypoints are fed into PnP. If the difference does not exceed the threshold, the ML-estimated keypoints are selected for use in PnP. The PnP algorithm then generates the 6DOF pose estimate for Frame N, which is used to update the KF prediction.

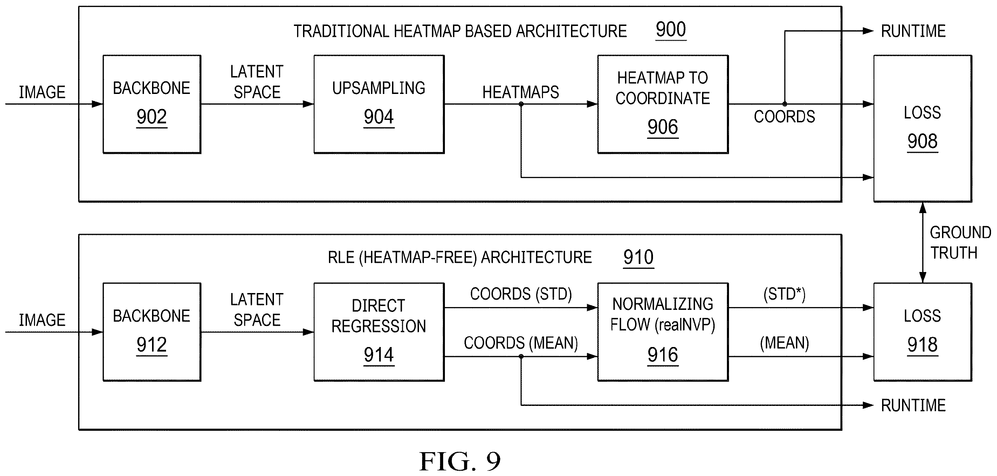

Figure 9 depicts a block diagram comparing heatmap and heatmap-free keypoint detection. The first element for a typical heatmap-based keypoint detector 900 is a backbone 902, which may be an encoder like ResNet (residual network). The backbone 902 converts the image into a latent space.

A form of upsampling 904 is performed to make sure the latent space is the same shape as the original input image. These outputs, which have the same x and y dimension as the input image, constitute heatmaps. For example, if the input image is 512x512 resolution, then the heatmaps are Nx512x512, where N is the number of keypoints. For each keypoint there is one heatmap. The "hot" part of the heatmap is likely where the network thinks the keypoint is.

A heatmap-to-coordinate module 906 can be used to get the actual coordinate of each keypoint, using a number of approaches such as taking the coordinate with maximal heat, using weighted averages, etc. The loss function 908 of the heatmap-based keypoint detector 900 us then compared to ground truth to train the backbone 902.

The disadvantage of the heatmap-based keypoint detector 900 architecture is that the upsampling 904 is typically slow. Having to operate on much larger inputs due to upsampling 904 (e.g., 512x512), in contrast to the backbone 902 operating on a condensed form (e.g., 128x128), requires more FLOPS (floating point operations per second).

In contrast to the heatmap-based approach, RLE (Residual Loglikelihood Estimation) architecture 910 uses a direct regression module 914 of the keypoints after encoding by a backbone 912 without upsampling (no heatmap involved). Typically, direct regression leads to inaccurate estimates. Therefore, RLE adds a normalizing flow module 916 which helps training. The loss function 918 from the normalizing flow module 916 is compared to ground truth.

However, at runtime, the only two blocks used are the backbone 912 and the direct regression module 914, which makes RLE fast but less accurate due to the absence of the normalizing flow.

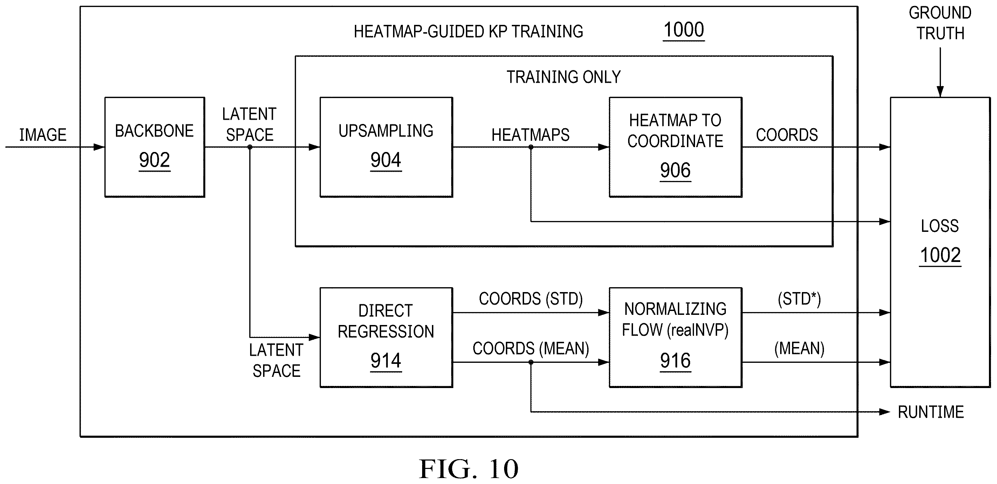

Figure 10 depicts a block diagram illustrating heatmap-guided keypoint detection training in accordance with an illustrative example. The heatmap-guided keypoint training architecture 1000 in Figure 10 merges the heatmap-based and regression (RLE) keypoint detection during training but only uses the regression pathway at runtime.

This architecture maintains the same runtime speeds for RLE, but both the heatmap and heatmap-free subnetworks are trained at concurrently. This approach has the benefit of incorporating the heatmap-training in the loss function 1002 during training. It is well studied that heatmap methods behave better and have better accuracy than heatmap-free methods. In architecture 1000, the backbone 902 is shared by both methods, allowing the heatmap based detection to teach it the best embedding and best latent space, which the direct regression module 914 can then use for more accurate results during runtime.

The loss function 1002 also incorporates a loss term for direct regression. In this case the RLE loss (with some normalization/weight) is used directly and a loss term for the heatmap-based method, which comprises heatmap loss plus a keypoint loss (as the heatmap-to-coordinate module 906 is a DSNT (Differentiable Spatial to Numerical Transform) layer).

Optionally, a consistency loss can also be included in loss function 1002 to ensure the coord outputs of both branches are the same. (i.e. add L_cons = ∥ (Coords - coords_heatmap) * vis_kps ∥. That is, for all visible keypoints, get the mean keypoint error between the two predicted keypoint coordinates).

It should be noted that this training method is not unique to RLE. Any type of direct regression method that may arise in the future would achieve accuracy gains using the present training method (without any runtime speed impact).

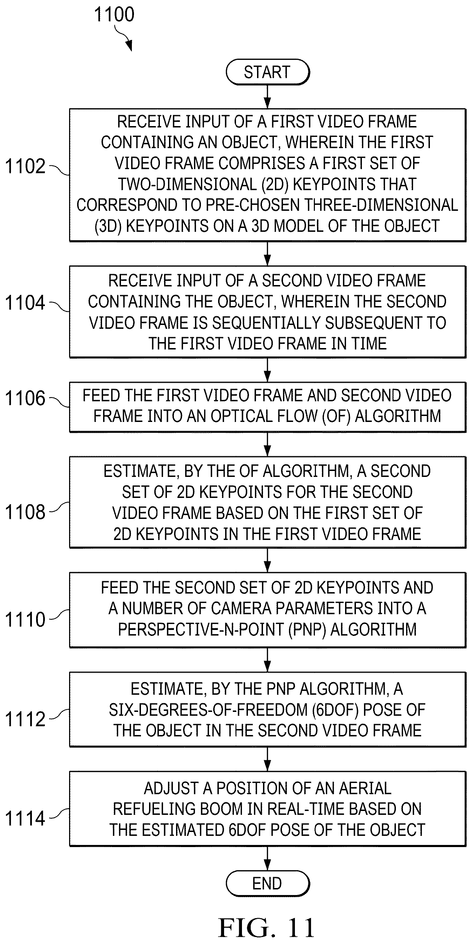

Figure 11 depicts a flowchart illustrating a method of pose estimation for aerial refueling in accordance with an illustrative example. Process 1100 can be implemented in the OF architecture 400 shown in Figure 4.

Process 1100 begins by receiving input of a first video frame containing an object, wherein the first video frame comprises a first set of two-dimensional (2D) keypoints that correspond to pre-chosen three-dimensional (3D) keypoints on a 3D model of the object (operation 1102).

Process 1100 then receives input of a second video frame containing the object, wherein the second video frame is sequentially subsequent to the first video frame in time (operation 1104).

The first video frame (including the first set of 2D keypoints) and second video frame are fed into an optical flow (OF) algorithm (operation 1106).

The OF algorithm estimates a second set of 2D keypoints for the second video frame based on the first set of 2D keypoints in the first video frame (operation 1108).

The second set of 2D keypoints and a number of camera parameters are fed into a perspective-n-point (PnP) algorithm (operation 1110). The PnP algorithm estimates a six-degrees-of-freedom (6DOF) pose of the object in the second video frame (operation 1112).

The position of an aerial refueling boom is adjusted in real-time based on the estimated 6DOF pose of the object (operation 1114). Process 1100 then ends.

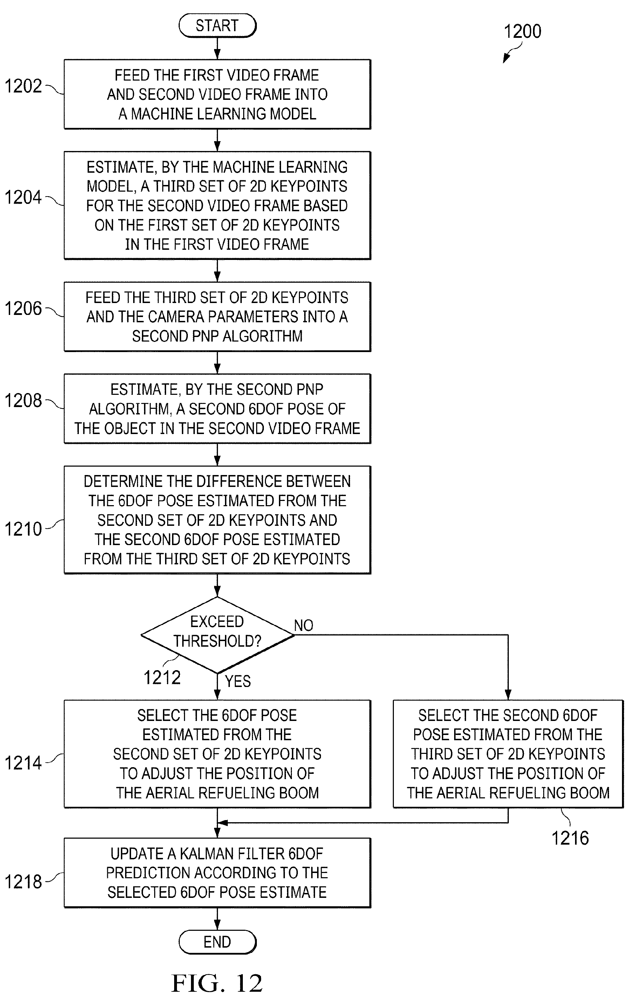

Figure 12 depicts a flowchart illustrating a method for late stage integration of optical flow and machine learning pose estimation for aerial refueling in accordance with an illustrative example. Process 1200 can be implemented in late stage fusion architecture 500 and is an extension of process 1100 in Figure 11.

Process 1200 begins by feeding the first video frame and second video frame into a machine learning model (operation 1202). The machine learning model estimates a third set of 2D keypoints for the second video frame based on the first set of 2D keypoints in the first video frame (operation 1204).

The third set of 2D keypoints and the camera parameters are fed into a second PnP algorithm (operation 1206). The second PnP algorithm estimates a second 6DOF pose of the object in the second video frame (operation 1208).

Process 1200 determines the difference between the 6DOF pose estimated from the second set of 2D keypoints and the second 6DOF pose estimated from the third set of 2D keypoints (operation 1210) and determines whether the difference exceeds a specified threshold (operation 1212).

Responsive to a determination that the difference exceeds a specified threshold, the 6DOF pose estimated from the second set of 2D keypoints is selected to adjust the position of the aerial refueling boom in operation 1114 (operation 1214).

Responsive to a determination that the difference does not exceed the specified threshold, the second 6DOF pose estimated from the third set of 2D keypoints is selected to adjust the position of the aerial refueling boom in operation 1114 (operation 1216).

A Kalman filter 6DOF prediction is then updated according to the selected 6DOF pose estimate (operation 1218). Process 1200 then ends.

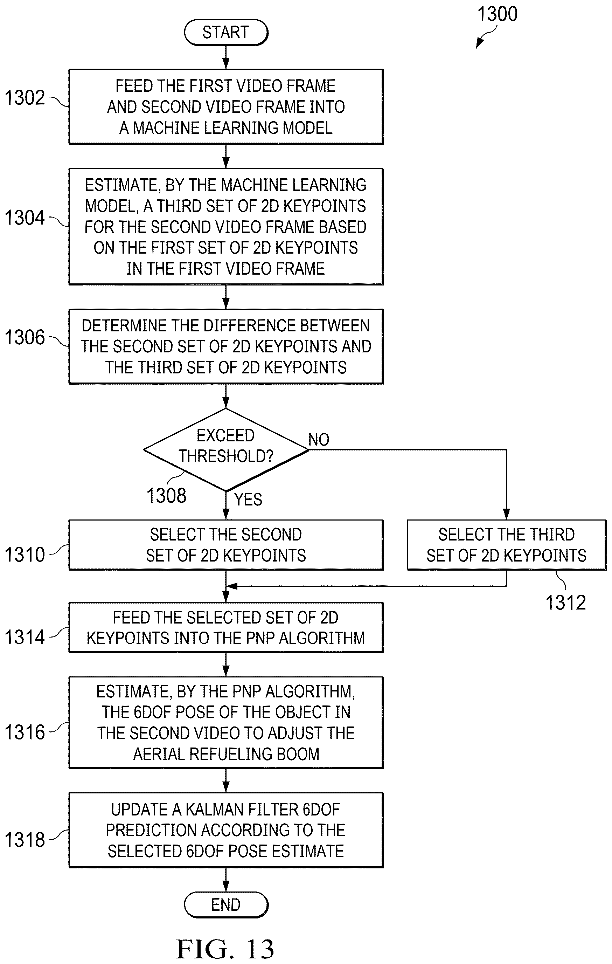

Figure 13 depicts a flowchart illustrating a method for early stage integration of optical flow and machine learning pose estimation for aerial refueling in accordance with an illustrative example. Process 1300 can be implemented in late early fusion architecture 600 and is an extension of process 1100 in Figure 11.

Process 1300 begins by feeding the first video frame and second video frame into a machine learning model (operation 1302). The machine learning model estimates a third set of 2D keypoints for the second video frame based on the first set of 2D keypoints in the first video frame (operation 1304).

Process 1300 determines the difference between the second set of 2D keypoints and the third set of 2D keypoints (operation 1306) and determines whether the difference exceeds a specified threshold (operation 1308).

Responsive to a determination that the difference exceeds a specified threshold, the second set of 2D keypoints is selected (operation 1310).

Responsive to a determination that the difference does not exceed the specified threshold, the third set of 2D keypoints is selected (operation 1312).

The selected set of 2D keypoints is fed into the PnP algorithm (operation 1314), and the PnP algorithm estimates the 6DOF pose of the object in the second video to adjust the aerial refueling boom (operation 1316).

A Kalman filter 6DOF prediction is then updated according to the 6DOF pose estimate (operation 1218). Process 1300 then ends.

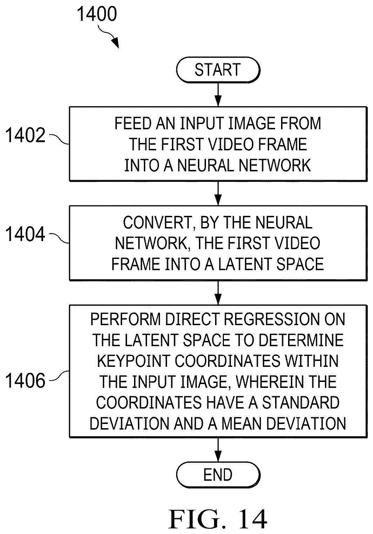

Figure 14 depicts a flowchart illustrating a method for detecting 2D keypoints in a video frame in accordance with an illustrative example. Process 1400 is an example of how the 2D keypoints in the first video frame are detected in operation 1102 on process 1100 and can be implemented in heatmap-guided keypoint training architecture 1000 in Figure 10.

Process 1400 begins by feeding an input image from the first video frame into a neural network (operation 1402). The neural network converts the first video frame into a latent space (operation 1404).

Process 1400 performs direct regression on the latent space to determine keypoint coordinates within the input image, wherein the coordinates have a standard deviation and a mean deviation (operation 1406). Process 1400 then ends.

Figure 1500 depicts a flowchart illustrating a method for training a neural network to detect 2D keypoints in a video image frame in accordance with an illustrative example. Process 1500 can be implemented in in heatmap-guided keypoint training architecture 1000 in Figure 10.

Process 1500 begins by feeding a training image into the neural network (operation 1502). The neural network converts the training image into a latent space (operation 1504). The latent space is upsampled to match its dimensions to the dimensions of the training image (operation 1506).

A heat map is generated from the upsampled latent space (operation 1508), and coordinates for the keypoints in the input image are determined from detected hot spots in the heat map (operation 1510).

Process 1500 also performs direct regression on the latent space to determine keypoint coordinates within the training image, wherein the coordinates have a standard deviation and a mean deviation (operation 1512). Process 1500 then normalizes the standard deviation and mean deviation of the keypoint coordinates (operation 1514).

Process 1500 determines a loss function by comparing ground truths to the keypoint coordinates determined from both the heatmap and the direct regression after normalizing the standard and mean deviations (operation 1516). Determining the loss function might further comprise a loss term that converges the keypoint coordinates determined from the heat map and direct regression. The neural network is updated according to the loss function (operation 1518). Process 1500 then ends.

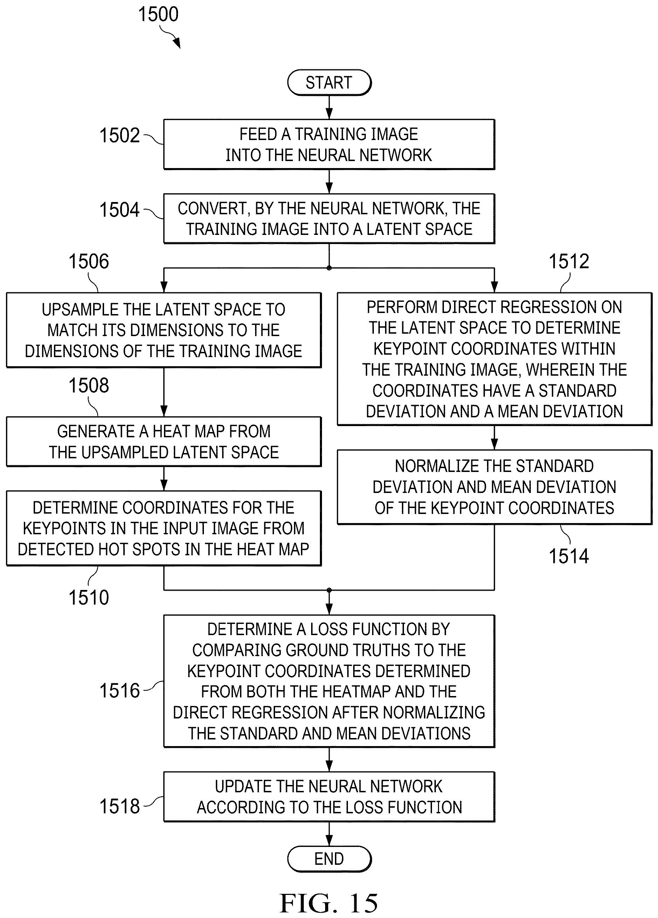

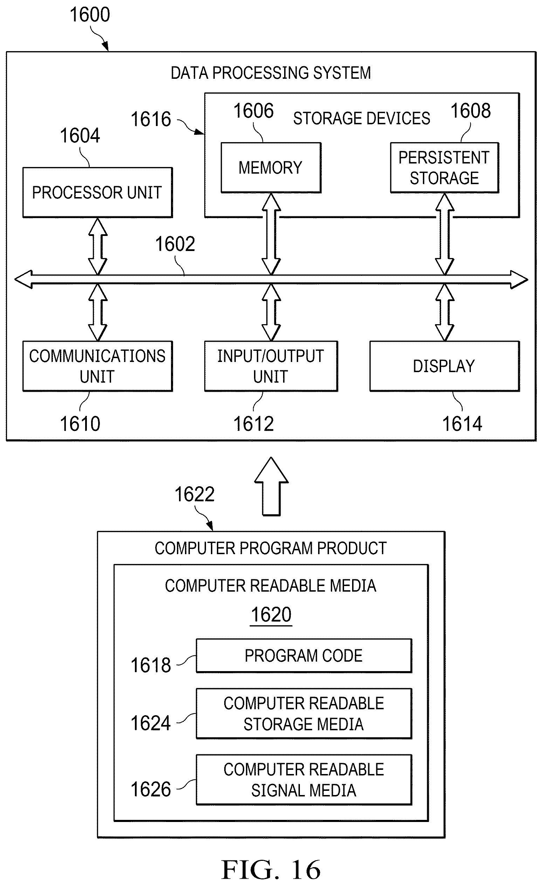

Turning now to Figure 16, an illustration of a block diagram of a data processing system is depicted in accordance with an illustrative example. Data processing system 1600 may be used to implement computer system 110 in Figure 1 and can be used to implement processes 1100-1500 in Figures 11-15. In this and certain other illustrative examples, data processing system 1600 includes communications framework 1602, which provides communications between processor unit 1604, memory 1606, persistent storage 1608, communications unit 1610, input/output (I/O) unit 1612, and display 1614. In this and certain other examples, communications framework 1602 takes the form of a bus system.

Processor unit 1604 serves to execute instructions for software that may be loaded into memory 1606. Processor unit 1604 may be a number of processors, a multi-processor core, or some other type of processor, depending on the particular implementation. In some examples, processor unit 1604 comprises one or more conventional general-purpose central processing units (CPUs). In some alternate examples, processor unit 1604 comprises one or more graphical processing units (GPUs).

Memory 1606 and persistent storage 1608 are examples of storage devices 1616. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices 1616 may also be referred to as computer-readable storage devices in these and certain other illustrative examples. Memory 1606, in these and certain other examples, may be, for example, a random access memory or any other suitable volatile or non-volatile storage device. Persistent storage 1608 may take various forms, depending on the particular implementation.

For example, persistent storage 1608 may contain one or more components or devices. For example, persistent storage 1608 may be a hard drive, a flash memory, a rewritable optical disk, a rewritable magnetic tape, or some combination of the above. The media used by persistent storage 1608 also may be removable. For example, a removable hard drive may be used for persistent storage 1608. Communications unit 1610, in these and certain other illustrative examples, provides for communications with other data processing systems or devices. In these and certain other illustrative examples, communications unit 1610 is a network interface card.

Input/output unit 1612 allows for input and output of data with other devices that may be connected to data processing system 1600. For example, input/output unit 1612 may provide a connection for user input through at least one of a keyboard, a mouse, or some other suitable input device. Further, input/output unit 1612 may send output to a printer. Display 1614 provides a mechanism to display information to a user.

Instructions for at least one of the operating system, applications, or programs may be located in storage devices 1616, which are in communication with processor unit 1604 through communications framework 1602. The processes of the different examples may be performed by processor unit 1604 using computer-implemented instructions, which may be located in a memory, such as memory 1606.

These instructions are referred to as program code, computer-usable program code, or computer-readable program code that may be read and executed by a processor in processor unit 1604. The program code in the different examples may be embodied on different physical or computer-readable storage media, such as memory 1606 or persistent storage 1608.

Program code 1618 is located in a functional form on computer-readable media 1620 that is selectively removable and may be loaded onto or transferred to data processing system 1600 for execution by processor unit 1604. Program code 1618 and computer-readable media 1620 form computer program product 1622 in these and certain other illustrative examples. In some examples, computer-readable media 1620 may be computer-readable storage media 1624 or computer-readable signal media 1626.

In these and certain other illustrative examples, computer-readable storage media 1624 is a physical or tangible storage device used to store program code 1618 rather than a medium that propagates or transmits program code 1618. Computer readable storage media 1624, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code 1618 may be transferred to data processing system 1600 using computer-readable signal media 1626. Computer-readable signal media 1626 may be, for example, a propagated data signal containing program code 1618. For example, computer-readable signal media 1626 may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system 1600 are not meant to provide architectural limitations to the manner in which different examples may be implemented. The different illustrative examples may be implemented in a data processing system including components in addition to or in place of those illustrated for data processing system 1600. Other components shown in Figure 16 can be varied from the illustrative examples shown. The different examples may be implemented using any hardware device or system capable of running program code 1618.

Further examples are set out in the following clauses.

Clause 1. A computer-implemented method of pose estimation for aerial refueling, the method comprising:
receiving input (1102) of a first video frame containing an object, wherein the first video frame comprises a first set of two-dimensional (2D) keypoints that correspond to pre-chosen three-dimensional (3D) keypoints on a 3D model of the object;
receiving input (1104) of a second video frame containing the object, wherein the second video frame is sequentially subsequent to the first video frame in time;
feeding (1106) the first video frame and second video frame into an optical flow (OF) algorithm;
estimating (1108), by the OF algorithm, a second set of 2D keypoints for the second video frame based on the first set of 2D keypoints in the first video frame;
feeding (1110) the second set of 2D keypoints and a number of camera parameters into a perspective-n-point (PnP) algorithm;
estimating (1112), by the PnP algorithm, a six-degrees-of-freedom (6DOF) pose of the object in the second video frame; and
adjusting a position (1114) of an aerial refueling boom in real-time based on the estimated 6DOF pose of the object.

Clause 2. The method of Clause 1, further comprising:
feeding (1202) the first video frame and second video frame into a machine learning model;
estimating (1204), by the machine learning model, a third set of 2D keypoints for the second video frame based on the first set of 2D keypoints in the first video frame;
feeding (1206) the third set of 2D keypoints and the camera parameters into a second PnP algorithm;
estimating (1208), by the second PnP algorithm, a second 6DOF pose of the object in the second video frame;
determining (1210) the difference between the 6DOF pose estimated from the second set of 2D keypoints and the second 6DOF pose estimated from the third set of 2D keypoints;
responsive to a determination that the difference exceeds a specified threshold, selecting (1214) the 6DOF pose estimated from the second set of 2D keypoints to adjust the position of the aerial refueling boom; and
responsive to a determination that the difference does not exceed the specified threshold, selecting (1216) the second 6DOF pose estimated from the third set of 2D keypoints to adjust the position of the aerial refueling boom.

Clause 3. The method of Clause 2, further comprising updating (1218) a Kalman filter 6DOF prediction according to the selected 6DOF pose estimate.

Clause 4. The method of any of Clauses 1 to 3, further comprising:
feeding (1302) the first video frame and second video frame into a machine learning model;
estimating (1304), by the machine learning model, a third set of 2D keypoints for the second video frame based on the first set of 2D keypoints in the first video frame;
determining (1306) the difference between the second set of 2D keypoints and the third set of 2D keypoints;
responsive to a determination that the difference exceeds a specified threshold, selecting (1310) the second set of 2D keypoints;
responsive to a determination that the difference does not exceed the specified threshold, selecting (1312) the third set of 2D keypoints;
feeding (1314) the selected set of 2D keypoints into the PnP algorithm; and
estimating (1316), by the PnP algorithm, the 6DOF pose of the object in the second video to adjust the aerial refueling boom.

Clause 5. The method of Clause 4, further comprising updating (1318) a Kalman filter 6DOF prediction according to the estimated 6DOF pose.

Clause 6. The method of an of Clauses 1 to 5, wherein the 2D keypoints in the first video frame are detected by:
feeding (1402) an input image from the first video frame into a neural network;
converting (1404), by the neural network, the first video frame into a latent space; and
performing (1406) direct regression on the latent space to determine keypoint coordinates within the input image, wherein the coordinates have a standard deviation and a mean deviation.

Clause 7. The method of Clause 6, wherein the neural network is trained by:
feeding (1502) a training image into the neural network;
converting (1504), by the neural network, the training image into a latent space;
upsampling (1506) the latent space to match its dimensions to the dimensions of the training image;
generating (1508) a heat map from the upsampled latent space;
determining (1510) coordinates for the keypoints in the input image from detected hot spots in the heat map;
performing (1512) direct regression on the latent space to determine keypoint coordinates within the training image, wherein the coordinates have a standard deviation and a mean deviation;
normalizing (1514) the standard deviation and mean deviation of the keypoint coordinates;
determining (1516) a loss function by comparing ground truths to the keypoint coordinates determined from both the heatmap and the direct regression after normalizing the standard and mean deviations; and updating (1518) the neural network according to the loss function.

Clause 8. The method of Clause 7, wherein the loss function further comprises a loss term that converges the keypoint coordinates determined from the heat map and direct regression.

Clause 9. A system for pose estimation for aerial refueling, the system comprising:
a storage device that stores program instructions;
one or more processors operably connected to the storage device and configured to execute the program instructions to cause the system to:
   receive input (1102) of a first video frame containing an object, wherein the first video frame comprises a first set of two-dimensional (2D) keypoints that correspond to pre-chosen three-dimensional (3D) keypoints on a 3D model of the object;
   receive input (1104) of a second video frame containing the object, wherein the second video frame is sequentially subsequent to the first video frame in time;
   feed (1106) the first video frame and second video frame into an optical flow (OF) algorithm;
   estimate (1108), by the OF algorithm, a second set of 2D keypoints for the second video frame based on the first set of 2D keypoints in the first video frame;
   feed (1110) the second set of 2D keypoints and a number of camera parameters into a perspective-n-point (PnP) algorithm;
   estimate (1112), by the PnP algorithm, a six-degrees-of-freedom (6DOF) pose of the object in the second video frame; and
   adjust a position (1114) of an aerial refueling boom in real-time based on the estimated 6DOF pose of the object.

Clause 10. The system of Clause 9, wherein the processors further execute instructions to cause the system to:
feed (1202) the first video frame and second video frame into a machine learning model;
estimate (1204), by the machine learning model, a third set of 2D keypoints for the second video frame based on the first set of 2D keypoints in the first video frame;
feed (1206) the third set of 2D keypoints and the camera parameters into a second PnP algorithm;
estimate (1208), by the second PnP algorithm, a second 6DOF pose of the object in the second video frame;
determine (1210) the difference between the 6DOF pose estimated from the second set of 2D keypoints and the second 6DOF pose estimated from the third set of 2D keypoints;
responsive to a determination that the difference exceeds a specified threshold, select (1214) the 6DOF pose estimated from the second set of 2D keypoints to adjust the position of the aerial refueling boom; and
responsive to a determination that the difference does not exceed the specified threshold, select (1216) the second 6DOF pose estimated from the third set of 2D keypoints to adjust the position of the aerial refueling boom.

Clause 11. The system of Clause 10, wherein the processors further execute instructions to cause the system to update (1218) a Kalman filter 6DOF prediction according to the selected 6DOF pose estimate.

Clause 12. The system of any of Clauses 9 to 11, wherein the processors further execute instructions to cause the system to:
feed (1302) the first video frame and second video frame into a machine learning model;
estimate (1304), by the machine learning model, a third set of 2D keypoints for the second video frame based on the first set of 2D keypoints in the first video frame;
determine (1306) the difference between the second set of 2D keypoints and the third set of 2D keypoints;
responsive to a determination that the difference exceeds a specified threshold, select (1310) the second set of 2D keypoints;
responsive to a determination that the difference does not exceed the specified threshold, select (1312) the third set of 2D keypoints;
feed (1314) the selected set of 2D keypoints into the PnP algorithm; and
estimate (1316), by the PnP algorithm, the 6DOF pose of the object in the second video to adjust the aerial refueling boom.

Clause 13. The system of Clause 12, wherein the processors further execute instructions to cause the system to update (1318) a Kalman filter 6DOF prediction according to the estimated 6DOF pose.

Clause 14. The system of any of Clauses 9 to 13, wherein the 2D keypoints in the first video frame are detected by:
feeding (1402) an input image from the first video frame into a neural network;
converting (1404), by the neural network, the first video frame into a latent space; and
performing (1406) direct regression on the latent space to determine keypoint coordinates within the input image, wherein the coordinates have a standard deviation and a mean deviation.

Clause 15. The system of Clause 14, wherein the neural network is trained by:
feeding (1502) a training image into the neural network;
converting (1504), by the neural network, the training image into a latent space;
upsampling (1506) the latent space to match its dimensions to the dimensions of the training image;
generating (1508) a heat map from the upsampled latent space;
determining (1510) coordinates for the keypoints in the input image from detected hot spots in the heat map;
performing (1512) direct regression on the latent space to determine keypoint coordinates within the training image, wherein the coordinates have a standard deviation and a mean deviation;
normalizing (1514) the standard deviation and mean deviation of the keypoint coordinates;
determining (1516) a loss function by comparing ground truths to the keypoint coordinates determined from both the heatmap and the direct regression after normalizing the standard and mean deviations; and
updating (1518) the neural network according to the loss function.

Clause 16. The system of Clause 15, wherein the loss function further comprises a loss term that converges the keypoint coordinates determined from the heat map and direct regression.

Clause 17. A computer program product for pose estimation for aerial refueling, the computer program product comprising:
a computer-readable storage medium having program instructions embodied thereon to perform the operations of:
receiving input (1102) of a first video frame containing an object, wherein the first video frame comprises a first set of two-dimensional (2D) keypoints that correspond to pre-chosen three-dimensional (3D) keypoints on a 3D model of the object;
receiving input (1104) of a second video frame containing the object, wherein the second video frame is sequentially subsequent to the first video frame in time;
feeding (1106) the first video frame and second video frame into an optical flow (OF) algorithm;
estimating (1108), by the OF algorithm, a second set of 2D keypoints for the second video frame based on the first set of 2D keypoints in the first video frame;
feeding (1110) the second set of 2D keypoints and a number of camera parameters into a perspective-n-point (PnP) algorithm;
estimating (1112), by the PnP algorithm, a six-degrees-of-freedom (6DOF) pose of the object in the second video frame; and
adjusting a position (1114) of an aerial refueling boom in real-time based on the estimated 6DOF pose of the object.

Clause 18. The computer program product of Clause 17, further comprising instructions for:
feeding (1202) the first video frame and second video frame into a machine learning model;
estimating (1204), by the machine learning model, a third set of 2D keypoints for the second video frame based on the first set of 2D keypoints in the first video frame;
feeding (1206) the third set of 2D keypoints and the camera parameters into a second PnP algorithm;
estimating (1208), by the second PnP algorithm, a second 6DOF pose of the object in the second video frame;
determining (1210) the difference between the 6DOF pose estimated from the second set of 2D keypoints and the second 6DOF pose estimated from the third set of 2D keypoints;
responsive to a determination that the difference exceeds a specified threshold, selecting (1214) the 6DOF pose estimated from the second set of 2D keypoints to adjust the position of the aerial refueling boom;
responsive to a determination that the difference does not exceed the specified threshold, selecting (1216) the second 6DOF pose estimated from the third set of 2D keypoints to adjust the position of the aerial refueling boom; and
updating (1218) a Kalman filter 6DOF prediction according to the selected 6DOF pose estimate.

Clause 19. The computer program product of Clause 17 or 18, further comprising instructions for:
feeding (1302) the first video frame and second video frame into a machine learning model;
estimating (1304), by the machine learning model, a third set of 2D keypoints for the second video frame based on the first set of 2D keypoints in the first video frame;
determining (1306) the difference between the second set of 2D keypoints and the third set of 2D keypoints;
responsive to a determination that the difference exceeds a specified threshold, selecting (1310) the second set of 2D keypoints;
responsive to a determination that the difference does not exceed the specified threshold, selecting (1312) the third set of 2D keypoints;
feeding (1314) the selected set of 2D keypoints into the PnP algorithm;
estimating (1316) , by the PnP algorithm, the 6DOF pose of the object in the second video to adjust the aerial refueling boom; and
updating (1318) a Kalman filter 6DOF prediction according to the estimated 6DOF pose.

Clause 20. The computer program product of any of Clauses 17 to 19, wherein the 2D keypoints in the first video frame are detected by:
feeding (1402) an input image from the first video frame into a neural network, wherein the neural network is trained by:
feeding (1502) a training image into the neural network;
converting (1504), by the neural network, the training image into a latent space;
upsampling (1506) the latent space to match its dimensions to the dimensions of the training image;
generating (1508) a heat map from the upsampled latent space;
determining (1510) coordinates for the keypoints in the input image from detected hot spots in the heat map;
performing (1512) direct regression on the latent space to determine keypoint coordinates within the training image, wherein the coordinates have a standard deviation and a mean deviation;
normalizing (1514) the standard deviation and mean deviation of the keypoint coordinates;
determining (1516) a loss function by comparing ground truths to the keypoint coordinates determined from both the heatmap and the direct regression after normalizing the standard and mean deviations, wherein the loss function comprises a loss term that converges the keypoint coordinates determined from the heat map and direct regression; and
updating (1518) the neural network according to the loss function
converting (1404), by the neural network, the first video frame into a latent space; and
performing (1406) direct regression on the latent space to determine keypoint coordinates within the input image, wherein the coordinates have a standard deviation and a mean deviation.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A computer-implemented method of pose estimation for aerial refueling, the method comprising:
receiving input (1102) of a first video frame containing an object, wherein the first video frame comprises a first set of two-dimensional (2D) keypoints that correspond to pre-chosen three-dimensional (3D) keypoints on a 3D model of the object;
receiving input (1104) of a second video frame containing the object, wherein the second video frame is sequentially subsequent to the first video frame in time;
feeding (1106) the first video frame and second video frame into an optical flow (OF) algorithm;
estimating (1108), by the OF algorithm, a second set of 2D keypoints for the second video frame based on the first set of 2D keypoints in the first video frame;
feeding (1110) the second set of 2D keypoints and a number of camera parameters into a perspective-n-point (PnP) algorithm;
estimating (1112), by the PnP algorithm, a six-degrees-of-freedom (6DOF) pose of the object in the second video frame; and
adjusting a position (1114) of an aerial refueling boom in real-time based on the estimated 6DOF pose of the object.

2. The method of claim 1, further comprising:
feeding (1202) the first video frame and second video frame into a machine learning model; and
estimating (1204), by the machine learning model, a third set of 2D keypoints for the second video frame based on the first set of 2D keypoints in the first video frame.

3. The method of claim 2, further comprising:
feeding (1206) the third set of 2D keypoints and the camera parameters into a second PnP algorithm;
estimating (1208), by the second PnP algorithm, a second 6DOF pose of the object in the second video frame;
determining (1210) the difference between the 6DOF pose estimated from the second set of 2D keypoints and the second 6DOF pose estimated from the third set of 2D keypoints;
responsive to a determination that the difference exceeds a specified threshold, selecting (1214) the 6DOF pose estimated from the second set of 2D keypoints to adjust the position of the aerial refueling boom; and
responsive to a determination that the difference does not exceed the specified threshold, selecting (1216) the second 6DOF pose estimated from the third set of 2D keypoints to adjust the position of the aerial refueling boom.

4. The method of claim 3, further comprising updating (1218) a Kalman filter 6DOF prediction according to the selected 6DOF pose estimate.

5. The method of any of claims 2 to 4, further comprising:
determining (1306) the difference between the second set of 2D keypoints and the third set of 2D keypoints;
responsive to a determination that the difference exceeds a specified threshold, selecting (1310) the second set of 2D keypoints;
responsive to a determination that the difference does not exceed the specified threshold, selecting (1312) the third set of 2D keypoints;
feeding (1314) the selected set of 2D keypoints into the PnP algorithm; and
estimating (1316), by the PnP algorithm, the 6DOF pose of the object in the second video to adjust the aerial refueling boom.

6. The method of claim 5, further comprising updating (1318) a Kalman filter 6DOF prediction according to the estimated 6DOF pose.

7. The method of any of claims 1 to 6, wherein the 2D keypoints in the first video frame are detected by:
feeding (1402) an input image from the first video frame into a neural network;
converting (1404), by the neural network, the first video frame into a latent space; and
performing (1406) direct regression on the latent space to determine keypoint coordinates within the input image, wherein the coordinates have a standard deviation and a mean deviation.

8. The method of claim 7, wherein the neural network is trained by:
feeding (1502) a training image into the neural network;
converting (1504), by the neural network, the training image into a latent space;
upsampling (1506) the latent space to match its dimensions to the dimensions of the training image;
generating (1508) a heat map from the upsampled latent space;
determining (1510) coordinates for the keypoints in the input image from detected hot spots in the heat map;
performing (1512) direct regression on the latent space to determine keypoint coordinates within the training image, wherein the coordinates have a standard deviation and a mean deviation;
normalizing (1514) the standard deviation and mean deviation of the keypoint coordinates;
determining (1516) a loss function by comparing ground truths to the keypoint coordinates determined from both the heatmap and the direct regression after normalizing the standard and mean deviations; and
updating (1518) the neural network according to the loss function.

9. The method of claim 8, wherein the loss function further comprises a loss term that converges the keypoint coordinates determined from the heat map and direct regression.

10. A computer program comprising computer program instructions that, when executed by one or more computer processors, cause the one or more computer processors to perform the method of any of claims 1 to 9.

11. A computer-readable storage medium having the computer program of claim 10 stored thereon.

12. A system for pose estimation for aerial refueling, the system comprising:
one or more computer processors;
a computer-readable storage medium having stored thereon a computer program comprising computer program instructions that, when executed by the one or more computer processors, cause the one or more computer processors to perform the method of any of claims 1 to 9.

13. A refueling aircraft comprising the system for pose estimation for aerial refueling of claim 12.

14. The refueling aircraft of claim 13, further comprising a refueling boom with an end, wherein the refueling boom is configured to be maneuvered such that the end can be inserted into a receptacle in a co-operating receiver aircraft during a refueling operation.

15. The refueling aircraft of claim 13 or 14, further comprising a camera configured to capture the first video frame and the second video frame.
